# EUROPEAN PATENT APPLICATION

(11) **EP 1 675 362 A2**
(43) Date of publication of application: **28.06.2006**
(21) Application number: 05027901.7
(22) Date of filing: 20.12.2005
(51) Int. Cl.: H04M 1/02

(54) **Foldable phone with a rotatable 3rd housing between the 2 folding housings**

(30) Priority: 21.12.2004 US 638885 P; 21.12.2004 US 639204 P; 06.05.2005 KR 2005038011
(71) Applicant: Samsung Electronics Co., Ltd., Yeongtong-gu Suwon-si, Gyeonggi-do (KR)
(72) Inventor: Kim, Young S., Los Altos California 94024 (US)
(74) Representative: Grünecker, Kinkeldey, Stockmair & Schwanhäusser Anwaltssozietät

(57) **Abstract**

Disclosed is a portable apparatus having a display device (310) adapted to be watched in the horizontal position and retained with a slant for convenient key operation using both hands. The portable apparatus includes a first housing (10); a second housing (20) adapted to fold on and unfold from the first housing (10); a hinge device (412) adapted to connect the first and second housings about a first hinge axis (A1); a third housing (30) positioned between the first and second housings (20) and adapted to rotate from the first housing (10) about a second hinge axis (A2), which is spaced from and perpendicular to the first hinge axis, in a direction moving away from the hinge device to be placed parallel to the longitudinal direction of the first and second housings (10,20); and a swing hinge device (510) positioned on the first housing (10) to connect the first and third housings (10,30) in such a manner that they can rotate about the second hinge axis (A2).

## Description

### BACKGROUND OF THE INVENTION

### 1. Field of the Invention

The present invention relates to portable communication apparatuses including cellular phones, PDAs (personal digital assistants), HHPs (hand-held phones), TV phones for conveniently watching digital multimedia broadcasting (DMB) mobile images or TVs, game phones, and message transmission phones, and more particularly to a portable communication apparatus having a display device adapted to be watched in the horizontal position and to be retained with a slant for conveniently watching DMB mobile images and inputting complicated data using both hands.

### 2. Description of the Related Art

In general, "portable communication apparatus" refers to an electronic apparatus that a user can carry to perform wireless communication with a desired partner. To facilitate portability, designs of such portable communication apparatuses tend not only to be compact, slim, and light, but are also moving toward providing multimedia availability, having a wider variety of functions. In particular, future portable communication apparatuses are expected to incorporate greater multi-functionality and be capable of multi-purpose utilization, being modified to be suitable for various multimedia or Internet environments.

Conventional portable communication apparatuses may be classified into various categories according to their appearance, such as bar-type portable communication apparatuses, flip-type portable communication apparatuses, and folder-type portable communication apparatuses. The bar-type communication apparatus have a single housing shaped like a bar. The flip-type communication apparatuses have a flip rotatably coupled to a bar-shaped housing by a hinge device. The folder-type communication apparatuses have a folder connected to a single bar-shaped housing by a hinge device in such a manner that the folder can be rotated to fold on or unfold from the housing.

Portable communication apparatuses may also be classified into neck wearable type portable communication apparatuses and wrist wearable type portable communication apparatuses according to the position or way in which users put on the portable communication apparatuses. The neck wearable type portable communication apparatuses are worn around the users' neck using a string, and the wrist wearable type portable communication apparatuses are worn around the users' wrist.

In addition, portable communication apparatuses may be classified into rotation-type portable communication apparatuses and sliding-type portable communication apparatuses according to the manner of opening and closing the portable communication apparatuses. In the rotation-type portable communication apparatuses, two housings are coupled to each other in such a manner that one housing rotates to be opened or closed relative to the other while they face each other. In the sliding-type portable communication apparatuses, two housings are coupled to each other in such a manner that one housing slides along a longitudinal direction to be opened or closed relative to the other housing. These variously classified portable communication apparatuses can be easily understood by those skilled in the art.

Meanwhile, conventional portable communication apparatuses now can transmit data at a high speed in addition to performing the basic voice communication function. In other words, according to the increase in consumer demand, portable communication apparatuses now provide a service using a wireless communication technology capable of transmitting data at a high speed.

Recent portable communication apparatuses also can be equipped with a camera lens to obtain video signals for transmission. In other words, current portable communication apparatuses have an external or embedded camera lens module which enables users to perform video communication with desired partners or to photograph desired subjects.

However, conventional portable communication apparatuses have a problem in that it is difficult to provide them with a wide display device and the key operation is inconvenient when inputting complicated data with a limited number of keys. The convenience of data input/output devices of portable apparatuses is now recognized by consumers as one of the most critical issues. However, if a portable apparatus is provided with a wide display device and has more keys arranged thereon, it inevitably becomes bulky. In particular, the display device of portable apparatuses is supposed to be watched in the horizontal position when viewing various mobile image media. The display device of conventional portable apparatuses has small horizontal and vertical sizes and is inconvenient to be watched in the horizontal position. Therefore, novel interfacing environments suitable for new data input/output are needed.

### SUMMARY OF THE INVENTION

Accordingly, the present invention has been made to solve the above-mentioned problems occurring in the prior art, and an object of the present invention is to provide a portable apparatus having a display device adapted to be watched in the horizontal position and capable of providing stereo sound for conveniently watching various mobile image media.

Another object of the present invention is to provide a portable apparatus having a display device adapted to be watched in the horizontal position and to be retained with a slant for conveniently checking displayed data.

Another object of the present invention is to provide a portable apparatus having at least thirty first and second keys for conveniently inputting complicated data using both hands.

Another object of the present invention is to provide a portable apparatus having a camera lens positioned on the display device for convenient video communication with desired partners.

Another object of the present invention is to provide a portable apparatus having a wide display device, at least sixty keys, and two speaker devices positioned in place while having a compact overall size.

In order to accomplish these objects, there is provided a portable apparatus including a first housing; a second housing adapted to fold on and unfold from the first housing; a hinge device adapted to connect the first and second housings about a first hinge axis; a third housing positioned between the first and second housings and adapted to rotate from the first housing about a second hinge axis, which is spaced from and perpendicular to the first hinge axis, in a direction moving away from the hinge device to be placed parallel to the longitudinal direction of the first and second housings; and a swing hinge device positioned on the first housing to connect the first and third housings in such a manner that they can rotate about the second hinge axis.

In accordance with another aspect of the present invention, there is provided a portable apparatus including a first housing having a first keyboard; a second housing having a second keyboard and adapted to fold on and unfold from the first housing; a hinge device adapted to connect the first and second housings about a first hinge axis; a third housing having a display device and a speaker device and positioned between the first and second housings while being adapted to rotate from the first housing about a second hinge axis, which is spaced from and perpendicular to the first hinge axis, to be placed parallel to the longitudinal direction of the first and second housings so that the display device can be watched in the horizontal position; and a swing hinge device positioned on the second housing to connect the first and third housings in such a manner that they can rotate about the second hinge axis.

### BRIEF DESCRIPTION OF THE DRAWINGS

The above and other objects, features, and advantages of the present invention will become more apparent from the following detailed description taken in conjunction with the accompanying drawings, in which:
FIG. 1 is a perspective view showing a portable communication apparatus according to a first preferred embodiment of the present invention in the folded position;
FIG. 2 is a perspective view showing a portable communication apparatus, with its second housing completely unfolded about a first hinge axis, according to a first preferred embodiment of the present invention;
FIG. 3 is a perspective view showing a portable communication apparatus, with its third housing completely rotated about second and third hinge axes and retained with a slant, according to a first preferred embodiment of the present invention;
FIG. 4 is a perspective bottom view showing the portable communication apparatus shown in FIG. 3;
FIG. 5 is a perspective view showing a portable communication apparatus according to a second preferred embodiment of the present invention in the folded position;
FIG. 6 is a perspective bottom view showing the portable communication apparatus shown in FIG. 5;
FIG. 7 is a perspective view showing a portable communication apparatus, with its second housing completely unfolded about a first hinge axis, according to a second preferred embodiment of the present invention;

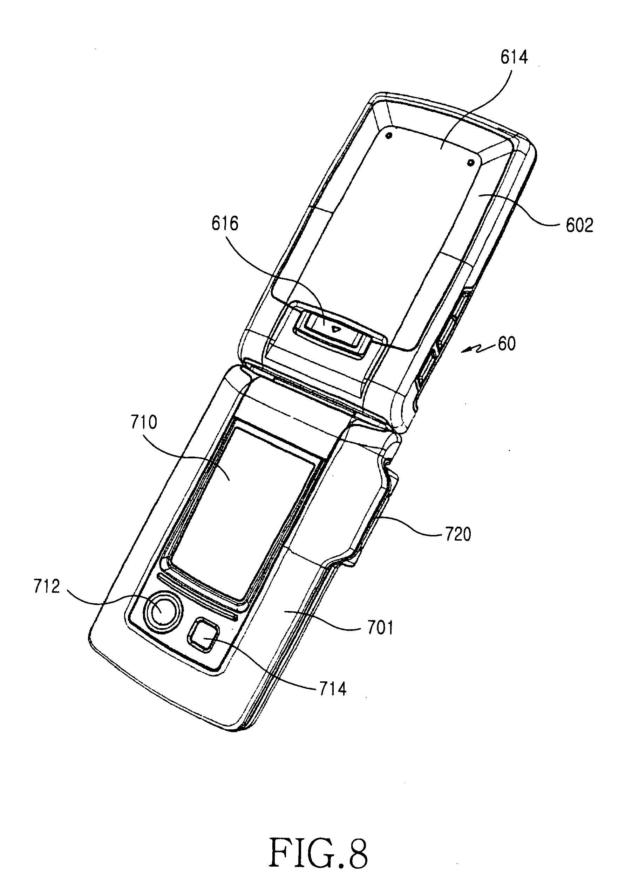

FIG. 8 is a perspective bottom view showing the portable communication apparatus shown in FIG. 7; and
FIG. 9 is a perspective view showing a portable communication apparatus, with its third housing completely rotated about second and third hinge axes and retained with a slant, according to a second preferred embodiment of the present invention.

### DETAILED DESCRIPTION OF THE PREFERRED EMBODIMENT

Hereinafter, preferred embodiments of the present invention will be described with reference to the accompanying drawings. In the following description of the present invention, a detailed description of known functions and configurations incorporated herein is omitted to avoid making the subject matter of the present invention unclear.

### A. First embodiment

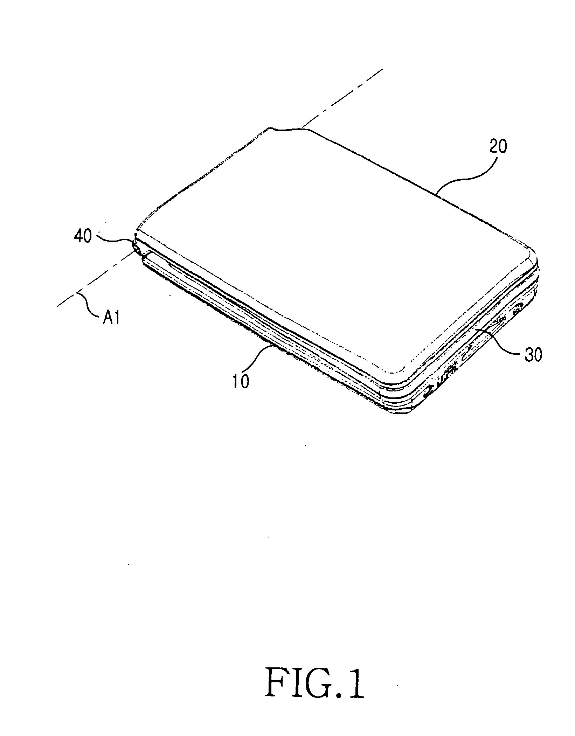

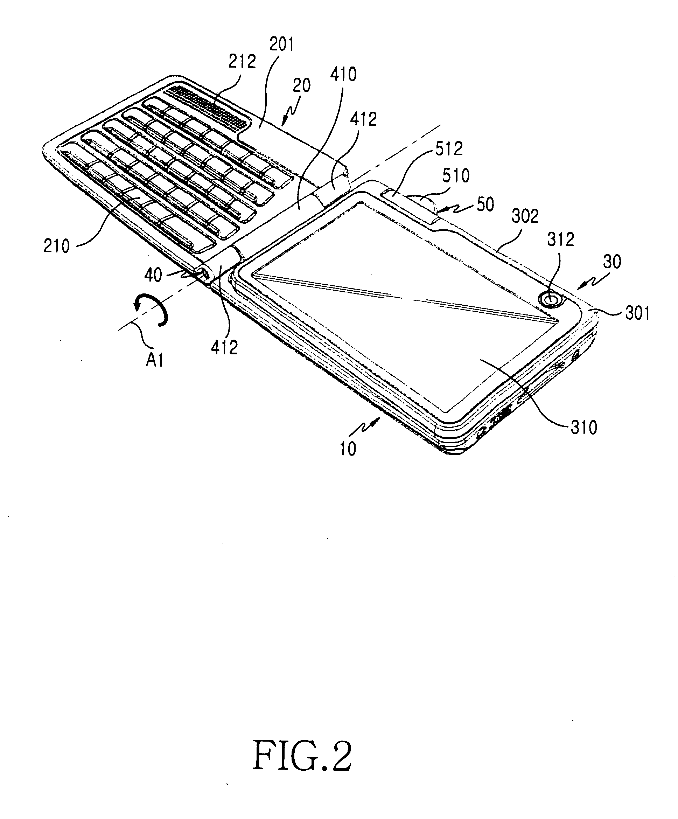

As shown in FIGs. 1 and 2, a portable apparatus according to a first preferred embodiment of the present invention includes a first housing 10, a second housing 20, and a third housing 30 positioned between the first and second housings 10 and 20 and adapted to move towards or away from the first and second housings 10 and 20, respectively. The second housing 20 is rotated about a first hinge axis A1 to fold on and unfold from the first housing 10. The second housing 20 is rotatably connected to the first housing 10 by a hinge device 40. The first, second, and third housings 10, 20, and 30 preferably have the shape of plates. When the portable apparatus is in a first position, particularly, when the second housing 20 is completely folded on the first housing 10 as shown in FIG. 1, the first, third, and second housings 10, 30, and 20 are successively laminated on one another. When the second housing 20 is completely unfolded from the first housing 10 as shown in FIG. 2, the third housing 30 faces the first housing 10.

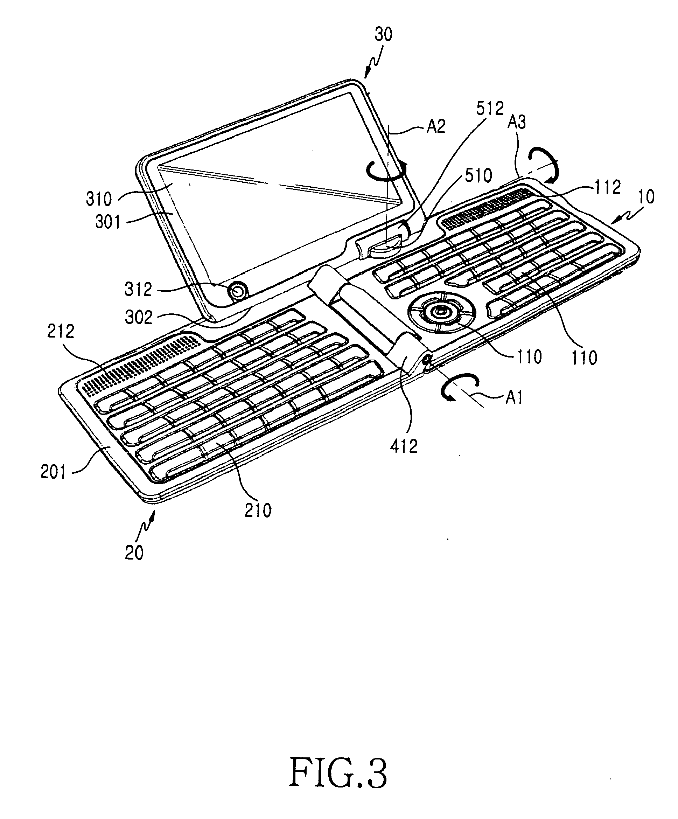

The construction of the portable apparatus according to the first preferred embodiment of the present invention will now be described in more detail with reference to FIGs. 2 and 3. As shown in FIGs. 2 and 3, the portable apparatus includes the first housing 10; the second housing 20 adapted to fold on and unfold from the first housing 10; the hinge device 40 for connecting the first and second housings 10 and 20 about the first hinge axis A1; the third housing 30 adapted to swing away from the first housing 10 about a second hinge axis A2, which is spaced from and perpendicular to the first hinge axis A1, to be placed parallel to and along the longitudinal direction of the first and second housings 10 and 20; and a swing hinge device 50 for connecting the first and third housings 10 and 30 in such a manner that they can rotate about the second hinge axis A2. The third housing 30 initially rotates away from the hinge device 40. This is because the rotation of the third housing 30 is limited by the hinge device 40 and is directed away from it rather than towards it.

Preferably, the third housing 30 is connected to the first housing 10 by the swing hinge device 50 in such a manner that it can rotate towards the first housing 10 about a third hinge axis A3, which is perpendicular to and spaced from the first and second hinge axes A1 and A2, respectively, while being oriented along the longitudinal direction of the first and second housings 10 and 20. After rotating a predetermined angle about the third hinge axis A3, the third housing 30 is retained with a slant so that the user can conveniently watch the apparatus, particularly, the display device 310 in the horizontal position (described later). The second hinge axis A2 is perpendicular to and extends through the first housing 10 and the third hinge axis A3 extends along the longitudinal direction of the first housing 10.

As shown in FIG. 3, the first housing 10 has a first keyboard 110 positioned on the upper surface thereof, which is composed of an array of a number of keys, and the second housing 20 has a second keyboard 210 positioned on the upper surface thereof, which is composed of an array of a number of keys. Preferably, the number of keys on each of the first and second keyboards 110 and 210 is greater or equal to 30. The first and second housings 10 and 20 have first and second speaker devices 112 and 212, respectively, to provide stereo sound. The first speaker device 112 is positioned on an outer corner of the first housing 10 and the second speaker 212 is positioned on an outer corner of the upper surface 201 of the second housing 20. The second hinge axis A2 is disposed adjacent to a lateral end of the first housing 10, and preferably adjacent to the hinge device 40. This is for the purpose of placing the third housing 30 in the middle between the first and second housings 10 and 20, when rotated about the second hinge axis A2.

The third housing 30 has a display device 310, in the form of a screen displayed on the upper surface 301 thereof, and a camera lens 312.

The third housing 30 is adapted to rotate 0-180° about the second hinge axis A2, while continuously facing the first housing 10, or not. Preferably, the third housing 30 is placed parallel to the longitudinal direction of the first and second housings 10 and 20 after rotating 180° about the second hinge axis A2. After the rotation, the third housing 30 may further rotate a predetermined angle towards the first housing 10 about the third hinge axis A3 to be retained with a slant. Two swing hinge modules (not shown) included in the swing hinge device 50 hold third housing 30 in the slanted position. Such a feature is well known to a person skilled in the art. Specifically, the amount of rotation of the third housing 30 about the second and third hinge axes A2 and A3 is set to be 180° or less.

FIG. 2 shows the second housing 20 after completely rotated away from the first housing 10 about the first hinge axis A1. FIG. 3 shows the third housing 30 after rotating towards the first housing 10 about the second hinge axis A2 and further rotating about the third hinge axis A3. In a state as shown in FIG. 3, the user can conveniently watch the display device 310 in the horizontal position while being provided with stereo sound from the first and second speaker devices 112 and 212. In addition, the user can conveniently input data using both hands through the first and second keyboards 110 and 210 positioned on the first and second housings, respectively.

The hinge device 40, which provides the first hinge axis A1, includes a slanted center hinge arm 410 formed on an end of the first housing 10 and a pair of slanted side hinge arms 412 formed on the second housing 20 to be coupled to the slanted center hinge arm 410. The swing hinge device 50, which provides the second and third hinge axes A2 and A3, includes a semi-cylindrical swing member 510 positioned parallel to the bottom surface 102 of the first housing 10 and a cylindrical single hinge arm 512 extending along a lateral end 302 of the third housing 30. The swing member 510 and the single hinge arm 512 are integral with each other.

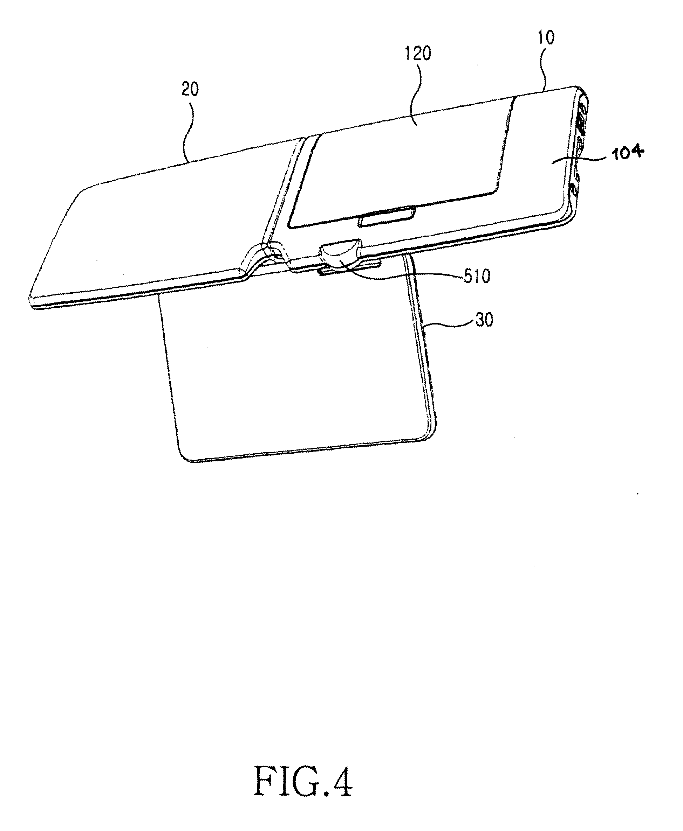

As shown in FIG. 4, the first housing 10 has a battery pack 120 positioned on the bottom surface thereof for power supply. The battery pack 120 is fastened/released by a locking knob in a direction perpendicular to the longitudinal direction of the first housing 10.

### B. Second embodiment

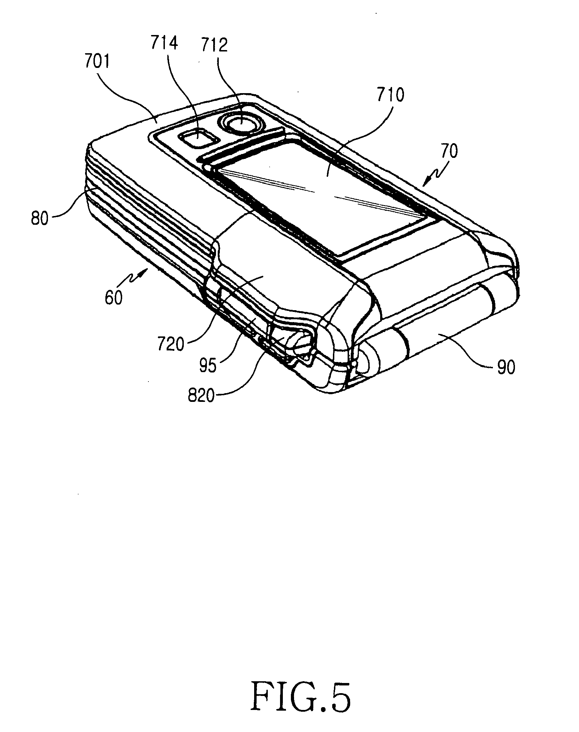

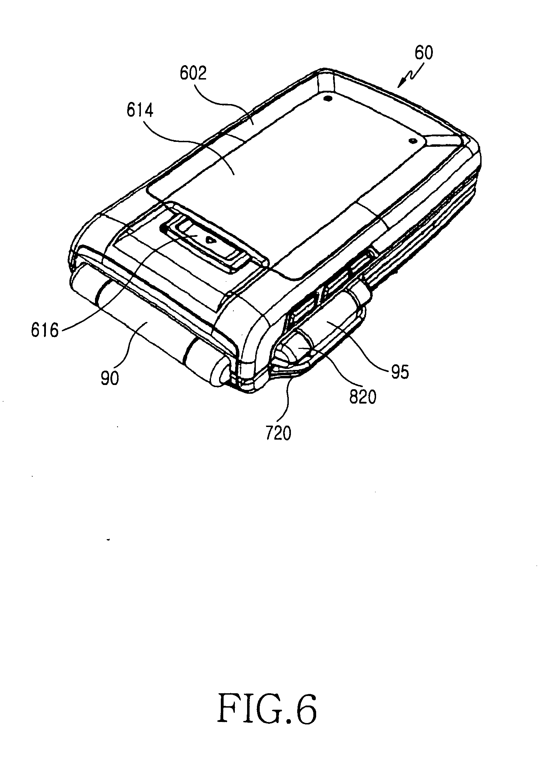

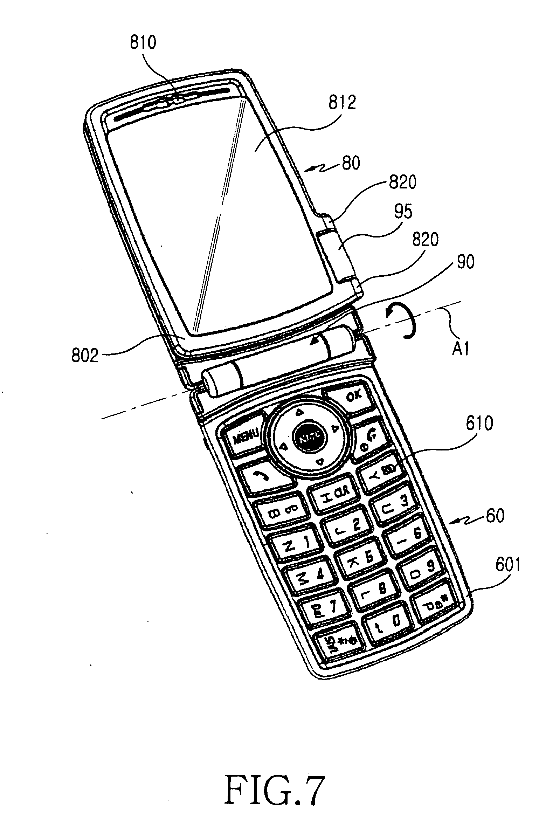

As shown in FIGs. 5, 7, and 9, a portable communication apparatus according to a second preferred embodiment of the present invention includes a first housing 60, a second housing 70, and a third housing 80 positioned between the first and second housings 60 and 70 and adapted to rotate towards or away from the first and second housings 60 and 70, respectively. The second housing 70 is adapted to rotate about a first hinge axis A1 towards or away from the first housing 60 to fold on or unfold from it. The second housing 70 is rotatably connected to the first housing 60 by a hinge device 90. The first, second, and third housings 60, 70, and 80 preferably have the shape of plates. When the portable apparatus is in a first position, particularly, when the second housing 70 is completely folded on the first housing 60 as shown in FIGs. 5 and 6, the first, third, and second housings 60, 80, and 70 are successively laminated on one another. When the portable apparatus is in a second position, particularly, when the second housing 70 is completely unfolded from the first housing 60 as shown in FIG. 7, the second and third housings 70 and 80 are laminated on each other. In addition, the third housing 80 opposes the first housing 60 about the hinge device 90.

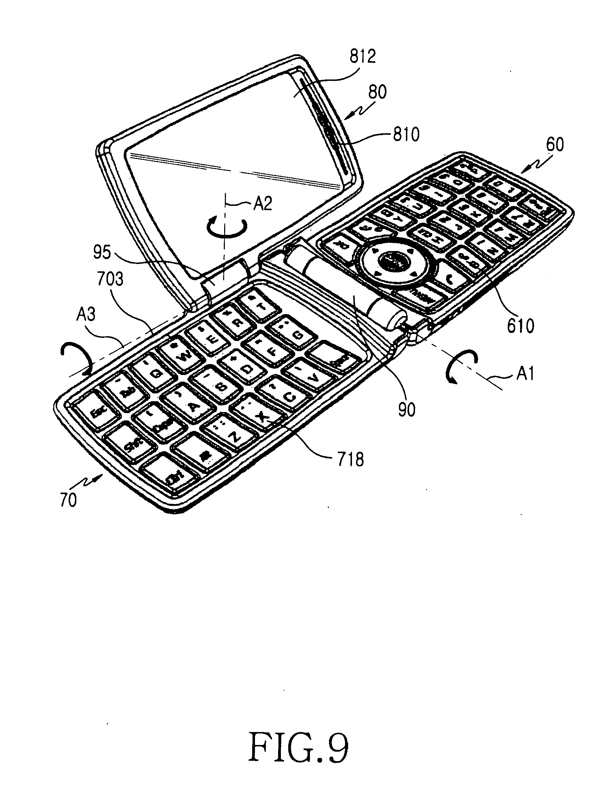

The construction of the portable communication apparatus according to the second preferred embodiment of the present invention will now be described in more detail with reference to FIGs. 7 and 9. As shown in FIGs. 7 and 9, the portable communication apparatus includes the first housing 60; the second housing 70 adapted to fold on and unfold from the first housing 60; the hinge device 90 for connecting the first and second housings 60 and 70 about the first hinge axis A1; the third housing 80 adapted to rotate away from the first housing 60 about a second hinge axis A2, which is spaced from and perpendicular to the first hinge axis A1, to be placed parallel to the longitudinal direction of the first and second housings 60 and 70; and a swing hinge device 95 for connecting the second and third housings 70 and 80 in such a manner that they can rotate about second and third hinge axes A2 and A3.

Preferably, the third housing 80 is connected to the second housing 70 by the swing hinge device 95 in such a manner that it can rotate away from the second housing 70 about the third hinge axis A3, which is perpendicular to the first and second hinge axes A1 and A2 while being spaced from the first hinge axis A1 and which is oriented along the longitudinal direction of the first and second housings 60 and 70. After rotating a predetermined angle about the third hinge axis A3, the third housing 80 is retained with a slant as shown in FIG. 9 so that the user can conveniently watch various mobile images, particularly DMB mobile images such as TVs or videos, using the display device 812 in the horizontal position (described later). The second hinge axis A2 is perpendicular to and extends through the second housing 70 and the third hinge axis A3 extends along the longitudinal direction of the second housing 70, particularly along the longitudinal direction of the first and second housings 60 and 70.

As shown in FIGs. 7 and 9, the first housing 60 has a first keyboard 610 positioned on the upper surface 601 thereof, which is composed of an array of a number of keys, and the second housing 70 has a second keyboard 718 positioned on the bottom surface thereof, which is composed of an array of a number of keys. The first and second keyboards 610 and 718 are symmetrically positioned about the hinge device 90 for convenient key operation using both hands. The number of keys on each of the first and second keyboards 610 and 718 is greater than or equal to 30. The first and second keyboards 610 and 718 are preferably composed of QWERTY keys.

The second hinge axis A2 is disposed adjacent to a lateral end 703 of the second housing 70, and preferably adjacent to the hinge device 90. This is for the purpose of placing the third housing 80 in the middle between the first and second housings 60 and 70, when rotated about the second hinge axis A2.

The third housing 80 has a speaker device 810 and a display device 812 disposed adjacent to the speaker device 810. The display device 812 has a screen displayed on the upper surface thereof.

The third housing 80 is adapted to rotate 0-180°, preferably 180°, about the second hinge axis A2 while continuously facing the first housing 60 to be placed parallel to the longitudinal direction of the first and second housings 60 and 70. After the rotation, the third housing 80 may further rotate a predetermined angle towards the second housing 70 about the third hinge axis A3 to be retained with a slant. The amount of rotation of the third housing 80 about the second and third hinge axes A2 and A3 is set to be 180° or less.

FIG. 7 shows the third housing 80 after completely rotating away from the first housing 60 about the first hinge axis A1 together with the second housing 70. FIG. 9 shows the third housing 80 after rotating away from the first housing 60 about the second hinge axis A2 and further rotating about the third hinge axis A3. In a state as shown in FIG. 9, the user can conveniently watch the display device 812 in the horizontal position while being retained with a slant. In addition, the user can conveniently input complicated data using both hands through the first and second keyboards 610 and 718 positioned on the first and second housings, respectively.

As shown in FIGs. 5 and 6, the swing hinge device 95 is mounted between the second and third housings 70 and 80. The second housing 70 has a hinge supporter 720 formed thereon to structurally reinforce the mounting state of the swing hinge device 95. The hinge supporter 720 protrudes in the lateral direction from a lateral end of the second housing 70. The swing hinge device 95 is coupled between a pair of side hinge arms 820 of the third housing 80 to provide the third hinge axis A3. Particularly, the side hinge arms 820 are positioned adjacent to an outer corner of an end of the third housing 80.

As shown in FIG. 5, the second housing 70 may be provided with an auxiliary display device 710, a camera lens 712, and a lighting device 714 positioned on the upper surface 701 thereof while being adjacent to one another. The camera lens 712 is disposed adjacent to the auxiliary display device 710. The lighting device 714 is also disposed adjacent to the auxiliary display device 710. The auxiliary display device 710 and the hinge supporter 720 are disposed adjacent to each other.

As shown in FIG. 6, the first housing 60 has a battery pack 614 and a locking knob 616 positioned on the bottom surface 602 thereof, the locking knob 616 being used to fasten/release the battery pack 614.

Additionally, two stepped portions are provided about and adjacent to the hinge device 90, as shown in FIG. 7, so that the third housing 80 can be stably received by the first and second housings. Particularly, an end of the third housing 80 is curved with a radius of curvature so that it can smoothly swing on the second housing 70 and the first and second housings 60 and 70 are provided with a mechanism for stably supporting the third housing 80.

In a state as shown in FIG. 7, the portable apparatus is preferably used in a normal communication mode. In a state as shown in FIG. 9, it is preferably used in a mode wherein the display device 812 needs to be in the horizontal position for a wider screen, including when watching DMB mobile images such as TVs or VODs and when inputting complicated messages using both hands.

As mentioned above, in the portable communication apparatus according to the present invention, the third housing is connected to the second housing in such a manner that it can rotate about the second and third hinge axes; the display device is adapted to be retained with a slant while being positioned in the longitudinal direction of the first and second housings; and at least sixty keys constitute the first and second keyboards so that the user can conveniently perform key operation using both hands. The portable communication apparatus still has a compact overall size, in spite of the components as enumerated above, for improved portability.

While the invention has been shown and described with reference to certain preferred embodiments thereof, it will be understood by those skilled in the art that various changes in form and details may be made therein without departing from the scope of the invention as defined by the appended claims.

## Claims

1. A portable apparatus comprising:
a first housing (10,60);
a second housing (20,70) adapted to fold on and unfold from the first housing;
a hinge device (40,90) adapted to connect the first and second housings about a first hinge axis, A1;
a third housing (30,80) positioned between the first and second housings and
adapted to rotate from the first housing about a second hinge axis, A2, which is spaced from and perpendicular to the first hinge axis, A1, in a direction moving away from the hinge device (40,90) to be placed parallel to the longitudinal direction of the first and second housings, and
a swing hinge device (50,95) positioned on one of the first housing (10,60) and
the second housing (20,70) to connect to the third housing (30,80) in such a manner that the third housing can rotate about the second hinge axis, A2.

2. The portable apparatus as claimed in claim 1, wherein the third housing (30,80) is rotated by the swing hinge device (50,95) about a third hinge axis, A3, which is perpendicular to and spaced from the first and second hinge axes, respectively, while being oriented along the longitudinal direction of the first and second housings (10,60; 20,70).

3. The portable apparatus as claimed in claims 1 or 2, wherein the third housing (30,80) is positioned at a slant with respect to the first and second housings after rotating about the third hinge axis, A3.

4. The portable apparatus as claimed in one of the previous claims, wherein the first housing (10,60) is provided with a first keyboard (110,610) comprising a number of first keys, the second housing (20,70) is provided with a second keyboard (210,718) comprising a number of second keys, and the number of each of the first and second keys (110,210) is in particular greater than or equal to 30.

5. The portable apparatus as claimed in one of the previous claims, wherein the first and second housings (10,20) have first and second speaker devices (112,212), respectively, to provide stereo sound, the first speaker device (112) being positioned in an outer corner region of the first housing (10) and the second speaker device being positioned in an outer corner region of the second housing (20).

6. The portable apparatus as claimed in one of the previous claims, wherein the third housing (30,80) has a display device (310,812) and a screen displayed on an upper surface thereof.

7. The portable apparatus as claimed in one of the previous claims, wherein at least one of the housings has a camera lens (312,712).

8. The portable apparatus as claimed in one of the previous claims, wherein the hinge device (40,90) comprises:
a slanted center hinge arm (410) formed on the first housing (10,60) and
slanted side hinge arms (412) formed on the second housing (20,70) to be coupled to the slanted center hinge arm.

9. The portable apparatus as claimed in one of the previous claims, wherein the swing hinge device (50) comprises a semi-cylindrical swing member (510) positioned parallel to the lower surface (102) of the first housing (10) and a cylindrical single hinge arm (512) extending along a lateral end (302) of the third housing (30), the swing member and the single hinge arm being integral with each other.

10. The portable apparatus as claimed in one of the previous claims, wherein the second hinge axis, A2, is perpendicular to an upper surface of the first housing.

11. The portable apparatus as claimed in one of the previous claims, wherein the second hinge axis, A2, is positioned adjacent to a lateral end of the first housing (10) and adjacent to the hinge device (40).

12. The portable apparatus as claimed in one of the previous claims, wherein the third housing (30) is adapted to swing in the range of 0-180° about the second hinge axis, A2, while continuously facing the first housing (10), preferably rotate 180° about the second hinge axis, A2, to be placed parallel to the longitudinal direction of the first and second housings (10,20), and, after the swing movement, the third housing (30) further rotates a predetermined angle towards the first housing about a third hinge axis, A3, to be retained with a slant.

13. The portable apparatus as claimed in claim.12, wherein the third housing (30) is adapted to rotate 180° about the second hinge axis, A2, to be placed parallel to the longitudinal direction of the first and second housings.

14. The portable apparatus as claimed in one of the previous claims, wherein the first, second, and third housings (10,20,30:60,70,80) are plate-shaped.

15. The portable apparatus as claimed in one of the previous claims, wherein the third housing (30,80) is adapted to rotate towards the hinge device to open the third housing.

16. The portable apparatus as claimed in claim 1, wherein the amount of rotation of the third housing is less than or equal to or 180°.

17. The portable apparatus according to one of the previous claims, wherein the third housing has a display device (310,812) that can be watched in a horizontal position when rotated to be placed parallel to a longitudinal direction of the first and second housing.

18. The portable apparatus as claimed in one of the previous claims, further comprising stepped portions positioned about the hinge device (90), respectively, so that the third housing (80) can be stably received in the first and second housings.

19. The portable apparatus as claimed in one of the previous claims, wherein a hinge supporter (720) protruding in the lateral direction is provided to support the swing hinge device (95).

20. The portable apparatus as claimed in one of the previous claims, wherein the second housing (70) has an auxiliary display device (710), a camera lens (712), and a lighting device (714) positioned on the upper surface (701) thereof.

21. The portable apparatus as claimed in one of the previous claims, wherein the third housing (80) is adapted to rotate about the first, second, and third hinge axes, A1, A2, A3, to be retained with a slant over a middle region between the first and second housings.
